# EUROPEAN PATENT SPECIFICATION

(11) **EP 0 958 467 B1**
(45) Date of publication and mention of the grant of the patent: **09.07.2003**
(21) Application number: 98905882.1
(22) Date of filing: 09.02.1998
(51) Int. Cl.: F16L 21/06

(54) **TUBULAR JOINT**
ROHRFÖRMIGES VERBINDUNGSSTÜCK
JOINT TUBULAIRE

(30) Priority: 10.02.1997 NO 970593
(43) Date of publication of application: 24.11.1999
(73) Proprietor: Helland, Ingolv, 4330 Algard (NO)
(72) Inventor: Helland, Ingolv, 4330 Algard (NO)
(74) Representative: Wagner, Karl Heinz
(86) International application number: NO9800044
(87) International publication number: WO98035177

(56) References cited:
- DE-A- 2 626 715
- US-A- 1 148 041
- US-A- 2 215 101
- US-A- 3 101 209
- US-A- 3 905 623

## Description

The invention relates to a pipe coupling comprising an outer split pipe end portion for the reception and clamping of a therewith concentric, inner pipe end portion.

In the joining of pipes and bends is often used, according to known technique, an outer pipe with a split end portion, which is slid over the end of an inner pipe, the split end portion of the outer pipe then being tightened on the exterior of the inner pipe by means of at least one annular clamp, which is activated by means of a bolt connection, after having been positioned around the split end portion of the outer pipe. The activation causes the annular clamp to be pressed together, which reduces the circumference/diameter of the outer end portion by utilization of the longitudinal splits.

A pipe coupling, of the kind in which annular clamps are used, is for example disclosed in US patent document No. 3 905 623, in which the deformable outer sleeve (10) is placed concentrically outside two pipe end portions (12 and 14) which are inserted one into the other, and has two of said bolt connections arranged thereto, with parallel axes and extending mainly in parallel with tangents to the pipe end portions, inserted one into the other, in the area of the respective longitudinal split. These annular clamps and deformable sleeves thus act as the tightening sleeve of the pipe coupling, which sleeve is to place outside the pipe end portions, inserted one into the other, in a separate operation, whereafter the bolt connection(s) is (are) tightened to effect a tightening action, which is necessary to ensure a reliable connection of the pipe end portions inserted one into the other.

In said US patent document a particular embodiment (Figs. 10 and 11) is described, in which the outer pipe itself forms the deformable sleeve. However, this construction requires a special configuration of both the outer and inner tube. The construction is rather complex, relatively expensive and difficult to make successfully, because there are strict requirements to accuracy.

Document US-A-2 215 101 describes a pipe coupling according to the preamble of claim 1.

Therefore, the object of the present invention is to alleviate defects and drawbacks by previously known techniques, and thus, firstly provide a structurally and operationally very simple pipe coupling of the kind initially mentioned, in which the inner tube does not require any specially formed coupling portion at the insertion end portion, and in which there is no need for an external clamping sleeve/ring which makes the pipe coupling more expensive, partly in its purchase price, partly by requiring a separate assembling operation.

The object is realised by a pipe coupling comprising the features of claim 1.

According to the invention, on opposite sides of at least one axial split in the end portion (coupling area) of the outer pipe, are formed material projections from surrounding pipe wall material, which projections are formed with aligned holes for (I) a bolt body of a bolt connection, and (II) for one insert body each respectively, which, again, is formed with said holes for the bolt body of said bolt connection, and (III) for one slide-over body each respectively, which in turn is formed with said holes for the bolt body of said bolt connection, and has a longitudinal slot defining one portion insertable into a respective material projection, while the remaining part of each slide-over body will remain on the outside of the adjacent material projection.

In alternative I the ends of the material projections themselves form abutment elements for the nuts of the bolt connection (stud screw) and head and nut (screw bolt) respectively, an imaginary line through the centres of said aligned holes extending substantially perpendicularly to the adjacent split, and substantially parallel to a tangent to the outer mantle surface of the outer pipe, in the area of said adjacent split.

In alternative II the ends of the inserts transversely to the pipes, possibly together with the ends of the material projections, are what forms the abutment for the nuts/head of the bolt connection.

In alternative III the ends of the slide-over/insertable bodies are what forms abutment for the nuts of the bolt connection and the head and nut respectively. In this embodiment the projecting material projections are formed themselves with a cross-section approximately rectangular or of almost right-angled U-shape.

Embodiment III is particularly well suited for joining pipes of either very thin wall or very thick wall. In pipes of very thin wall the material will not be strong enough to enable use in conjunction with embodiment I, and in pipes of very thick wall it may be problematic to have material projections of essentially triangular cross section, according to alternative I, pressed outwards to a sufficient extent.

In embodiment I each material projection thus forms a guiding for the bolt of the bolt connection and an abutment for a nut (head). A particularly simple and strongly drawn abutment portion on either side of the split may, according to the invention, have an approximately triangular cross-sectional form, tapering in a radially outward direction.

Advantageously, in all of the embodiments the outer pipe may have two diametrically opposite longitudinal splits extending axially inwards from the terminal edge of the pipe end portion.

Examples of embodiments of pipe couplings configured according to the invention will be explained in further detail in the following in the form of preferred embodiments with reference to the accompanying drawings, in which:
Figs. 1 - 3 show a first embodiment, Figs. 4 and 5 a second embodiment and Figs. 6 - 9 a third embodiment.
Fig. 1 shows a partial side view of an established pipe coupling, in which the end portion of an inner pipe has been inserted into the connecting portion of an outer pipe;
Fig. 2 shows a cross section corresponding to the sectional plane II-II in Fig. 1; and
Fig. 3 shows the connecting portion of the outer pipe after a 90° rotation compared to that in Fig. 1, to show the possible cross-sectional shape of the bolt-guiding material projections;
Fig. 4 shows one half of a cross-section through two concentric pipes, in which the outer pipe is formed with material projections in the area of a longitudinal split, inserts, screw bolt with fixed head and tightening nut being shown in split sectional view;
Fig. 5 shows the embodiment according to Fig. 4 in the assembled state;
Fig. 6 shows one half of a cross-section through two concentric pipes with a pipe joining device according to a third embodiment, slide-over elements, screw bolt with fixed head and tightening nut arranged thereto being shown in split sectional view:
Fig. 7 shows the embodiment according to Fig. 6 in the assembled state;
Fig. 8 shows a partial side view/planar view in the area of one of the longitudinal splits in the end portion area of the end portion of an outer pipe according to Figs. 6 and 7; and
Fig. 9 shows a corresponding partial side view of the end portion of an outer pipe after a 90° rotation relative to that in Fig. 8, to show a rectangular/U-shaped cross-sectional form of the material projections.

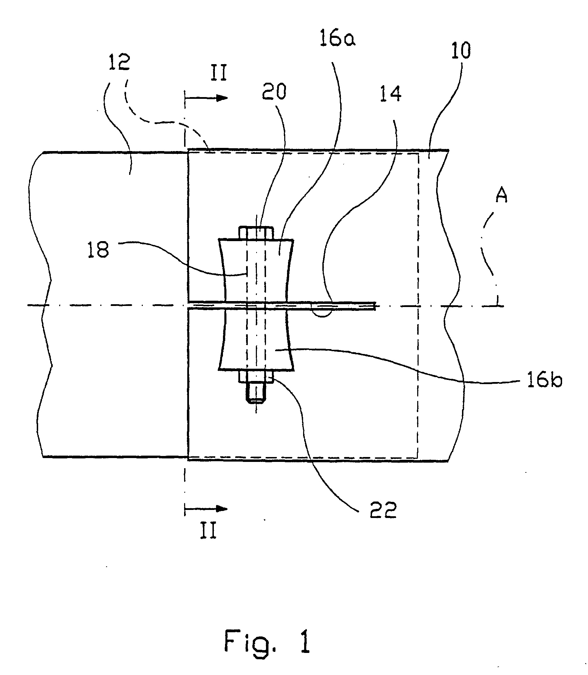

First, reference is made to Figs. 1 - 3 which show a first embodiment of a pipe coupling/joint in accordance with the present invention.

In the drawings reference numeral 10 defines an outer pipe of a pipe coupling/joint in relation to an inner pipe 12 of so much smaller outer diameter than the inner diameter of the outer pipe 10, that the end portion of the inner pipe 12 may be inserted concentrically into the end portion/coupling portion of the outer pipe 10.

Over at least a certain axial distance of its end/coupling portion, the outer pipe 10 is configured in the exemplary embodiment with two diametrically placed longitudinal splits 14, whose axially outer ends open at the terminal edge of the outer pipe 10.

In the shown exemplary embodiment the inner pipe 12 has no special configuration, which simplifies the manufacturing and simplifies the assembling.

In the area of each longitudinal split 14, there are formed, on the opposite sides thereof, radially projecting material projections 16a, 16b, which have been drawn from surrounding pipe wall portions of the outer pipe. The material projections may be formed through pressing or in other way.

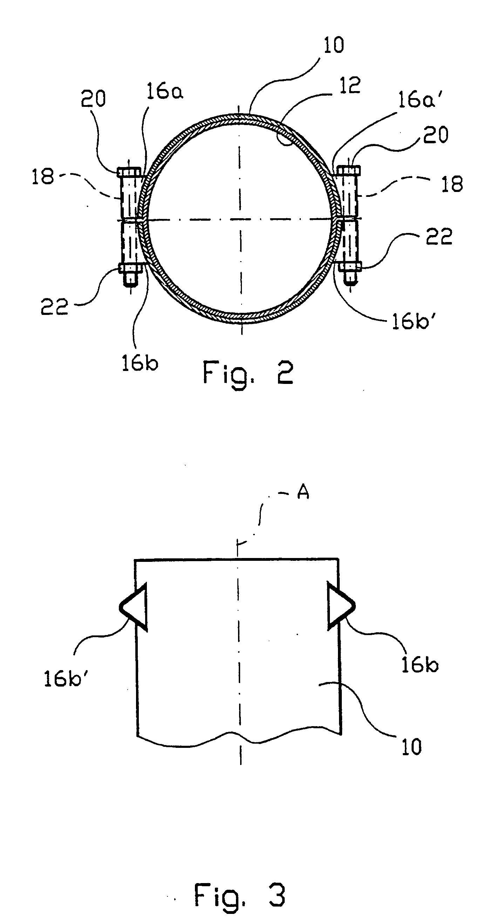

As appears from fig. 3, each radially extending material projection 16a, 16b may have a cross-section shaped essentially as an inverted V, the V-point of the cross-section pointing radially outwards from the outer pipe 10. The material projections have mutually aligned through openings which generally extend transversely to the longitudinal axis A of the outer pipe 10, and together form a receiving bore for a screw bolt 18 with a fixed head 20 and a tightening nut 22 at the opposite bolt end portion. The end surfaces of a pair of cooperating material projections 16a, 16b, facing opposite directions, form abutting surfaces for respectively the adjacent bolt head 20 and the nut 22. This screw bolt 18,20 may, of course, by replaced by a stud screw with a threaded portion at opposite ends for nuts.

When the inner pipe 12 has been inserted by its end portion into the end portion of the outer pipe 10 having not tightened bolt connections 18,20,22 which are subsequently tightened and make the circumferential portion of the outer pipe tighten around the inserted end portion of the inner pipe 12, whereby the circumference of the coupling portion of the outer pipe is reduced by utilisation of the longitudinal splits 14, the pressing together of the two pipes 10, 12 may be sufficient, not only to establish a strong, reliable joint, but also a safe tightening between the two pipes 10,12.

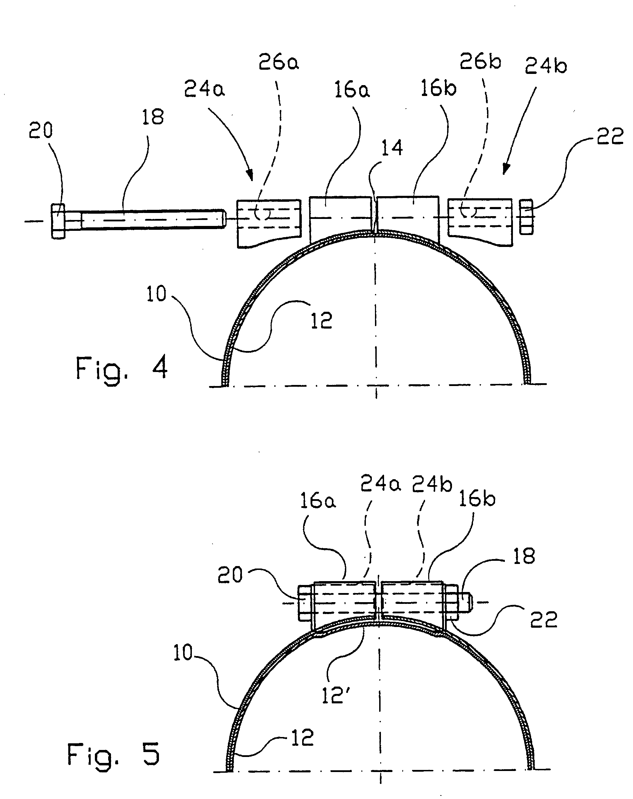

In Figs. 4 and 5 is shown a second embodiment, in which parts identical to those shown in Figs. 1 - 3, are defined by same reference numerals. Thus the outer pipe is defined by 10, the inner pipe by 12 and the transversely projecting material projections by 16a and 16b, the bolt shank 18 having a fixed head 20 and being provided with a loose tightening nut 22.

In this embodiment each material projection 16, 16b has an insert, respectively 24a and 24b, arranged thereto, each formed with a through bore, respectively 26a and 26b, for passing the bolt shank 18. The projecting ends of these inserts 24a and 24b and possibly the end surfaces of the material projections 16a, 16b, facing opposite directions, serve as abutments for the bolt head 20 and the tightening nut 22. In the tightening, the material of the inserts are pressed into the inner pipe 12, so that a more secure connection is created as a consequence of the pipe 12 being squeezed in the pipe portion 12'.

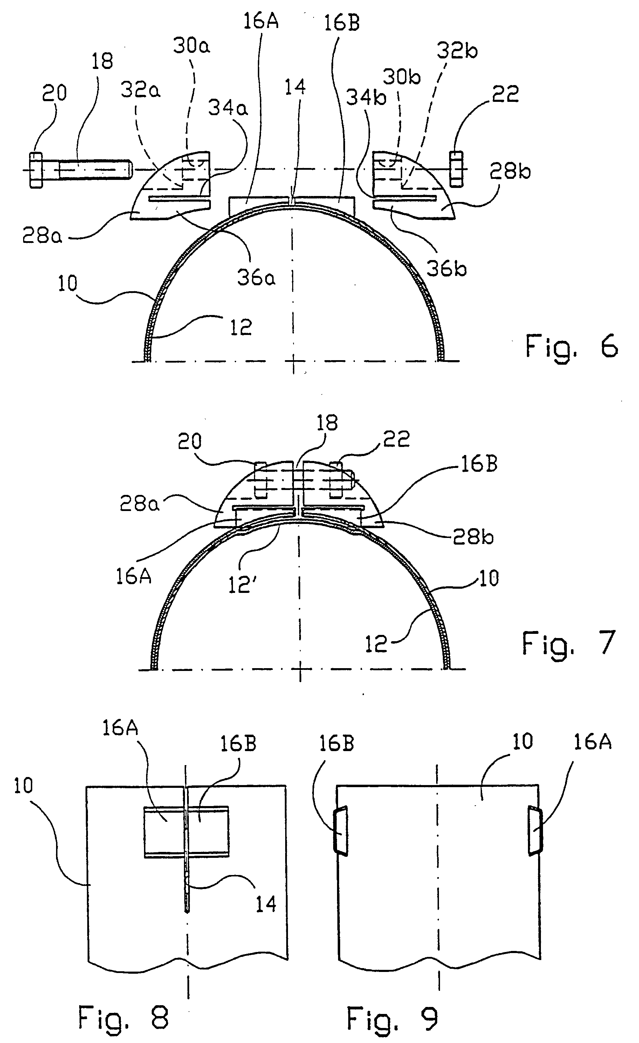

The pipe coupling/joint according to the third exemplary embodiment in Figs. 6 - 9 works approximately in the same way. Here, the material projections 16A, 16B are not drawn outwards into portions of triangular cross-sectional form, but, on the other hand, of a rectangular/U-shaped cross-section. Over the material projections 16A, 16B projecting transversely to the pipes 10, 12 are slid, Fig. 7, the slide-over elements 28a, 28b, shown in split sectional view in Fig. 6, with bores 30a, 30b for the passing of the bolt shank 18. Recessed surfaces 32a, 32b extending essentially parallel to the adjacent split 14 of the outer pipe 10, form abutments for the head 20 of the bolt and the nut 22. Each of the slide-over elements 28a, 28b are formed with a slot 34a, 34b defining a portion 36a and 36b, respectively, which is insertable into the through bore of an adjacent material projection, and which occupies substantially the entire portion, while the rest of each slide-over element 28a, 28b remains outside the material projection 16A, 16B, respectively. Earlier the advantages of this embodiment by thin and thick pipe materials have been explained.

In the tightening, the portions 36a, 36b are pressed into the inner pipe 12, so that a more secure connection is achieved as a consequence of the pipe 12 being squeezed in the pipe portion 12'. Figs. 8 and 9 show the rectangular/U-shaped cross section of the material projections 16A, 16B in the configuration used in the third embodiment, Figs. 6 - 9.

## Claims

1. A pipe coupling for firmly joining pipe end portions, one end portion inserted telescopically within the other, of two pipes (10, 12) or pipe bends, comprising an outer pipe end portion provided with at least one axial end edge split (14), a clamping device provided on said outer end portion for, upon activation, clamping the inner pipe end portion firmly within said outer pipe end portion, said clamping device comprising lug-shaped holders (16a, 16b; 16a', 16b'; 16A, 16B) made from material of the outer pipe end portion, integrally therewith, and projecting radially outwardly transversely to the pipes, as well as disposed in at least one cooperating pair, one lug-shaped holder at either side of said axial split (14), said pair(s) of lug-shaped holders constituting holder means of screw bolt connections (18,20,22), said pair(s) of lug-shaped holders (16a, 16b; 16a', 16b'; 16A, 16B) forming aligned through-going holes or slots, the tightening of said screw bolt connections (18, 20, 22) activating the clamping device, clamping said outer pipe end portion firmly around the therein inserted inner pipe end portion, establishing the operative pipe coupling, wherein said lug-shaped holders (16a, 16b; 16a', 16b'; 16A, 16B) each has the form of a pressed-out pipe material portion integral with said outer pipe end portion, each such lug-shaped holder being positioned at an axial distance from the free end edge of said outer pipe end portion, each lug-shaped holder exhibiting radially or laterally, respectively, tapering, substantially trapezoid or U-shaped cross-section, the narrower portion thereof being positioned at the largest radial distance from the common longitudinal axis (A) of the two pipes (10, 12).

2. A pipe coupling as set forth in claim 1,
**characterized in that** said aligned through slots of said pressed-out material portions (16a, 16b; 16A, 16B) are provided for at least partial reception of insertable reinforcing pieces (24a, 24b; 28a, 28b) formed with passages (26a, 26b; 30a, 30b) aligned in pairs for and formed for the passage and reception of a bolt shaft (18) of the screw bolt connection (18, 20, 22), also including at least one tightening nut (22) at a threaded shaft end portion and, at the other end, a nut or a fixed bolt head (20).

3. A pipe coupling as set forth in claim 2,
**characterized in that** said reinforcing pieces (28a, 28b) have bearing surfaces (32a, 32b) facing in opposite direction and forming abutment and bearing surfaces for the bolt head (20) and the nut (22) in the tightened position of the bolt connection (18,20,22).

4. A pipe coupling as set forth in claim 2,
**characterized in that** said reinforcing pieces (28a, 28b) are constituted by bodies, each being formed with a particular attachment portion (36a, 36b) insertable into the through slot of the respective pressed-out material portion (16A, 16B), and that the attachment portions (36a, 36b) of one cooperating pair are facing each other by their free outer ends, so that they are hold in position as well as being pressed into engagement in the through slots of a pair of pressed-out material portions (16A, 16B) upon the tightening of the screw bolt connection (18,20,22).

## Patentansprüche

1. Rohrkupplung zum dauerhaften Verbinden von Rohrendabschnitten, wobei ein Endabschnitt in den anderen von zwei Rohren (10, 12) oder Rohrbiegungen teleskopisch eingesetzt ist, aufweisend einen äußeren Rohrendabschnitt, der mit mindest einer axialen Endrandteilung (14) versehen ist, eine Klemmeinrichtung, die auf dem äußeren Endabschnitt vorgesehen ist, um bei einer Aktivierung den inneren Rohrendabschnitt dauerhaft in den äußeren Rohrendabschnitt zu verklemmen, wobei die Klemmeinrichtung nasenförmige Halter (16a, 16b; 16a', 16b'; 16A, 16B) aufweist, die aus Material des äußeren Rohrendabschnitts integral mit diesem hergestellt sind und radial auswärts quer zu den Rohren vorstehen, sowie in zumindest einem zusammenwirkenden Paar angeordnet sind, einen nasenförmigen Halter auf jeder Seite der axialen Teilung (14), wobei das Paar bzw. die Paare der nasenförmigen Halter ein Haltermittel aus Schraubbolzenverbindungen (18, 20, 22) bildet bzw. bilden, wobei das Paar bzw. die Paare von nasenförmigen Haltern (16a, 16b; 16a', 16b'; 16A, 16B) ausgerichtete Durchgangslöcher oder Schlitze bilden, wobei das Verspannen der Schraubbolzenverbindungen (18, 20, 22) die Klemmeinrichtung aktiviert unter Verklemmen des äußeren Rohrendabschnitts dauerhaft um den darin eingesetzten inneren Rohrendabschnitt unter Bereitstellung der betriebsbereiten Rohrkupplung, wobei die nasenförmigen Halter (16a, 16b; 16a', 16b'; 16A, 16B) jeweils die Form eines herausgepressten Rohrmaterialabschnitts integral mit dem äußeren Rohrendabschnitt aufweist, wobei jeder derartige nasenförmige Halter unter einer axialen Distanz von dem freien Endrand des äußeren Rohrendabschnitts angeordnet ist, wobei jeder nasenförmige Halter radial oder lateral einen sich verjüngenden, im wesentlichen trapezförmigen oder U-förmigen Querschnitt aufweist, dessen schmalerer Teil unter der größten radialen Distanz von der gemeinsamen Längsachse A der beiden Rohre (10, 12) zu liegen kommt.

2. Rohrkupplung nach Anspruch 1, **dadurch gekennzeichnet, dass** die ausgerichteten Durchgangsschlitze der herausgepressten Materialabschnitte (16a, 16b; 16A, 16B) zumindest zur teilweisen Aufnahme von einführbaren Verstärkungselementen (24a, 24b; 28a, 28b) vorgesehen sind, die mit Durchlässen (26a, 26b; 30a, 30b) gebildet sind, die paarweise ausgerichtet sind und gebildet sind für den Hindurchtritt und die Aufnahme eines Bolzenschaftes (18), einer Schraubbolzenverbindung (18, 20, 22), die außerdem zumindest eine Festspannmutter (22) an einem Gewindeendabschnitt und andererseits eine Mutter oder einen stationären Bolzenkopf (20) aufweist.

3. Rohrkupplung nach Anspruch 2, **dadurch gekennzeichnet, dass** die Verstärkungselemente (28a, 28b) Tragflächen (32a, 32b) aufweisen, die in entgegengesetzter Richtung weisen und Anschlag- und Lagerflächen für den Bolzenkopf (20) und die Mutter (22) in der Festspannposition der Bolzenverbindung (18, 20, 22) bilden.

4. Rohrkupplung nach Anspruch 2, **dadurch gekennzeichnet, dass** die Verstärkungselemente (28a, 28b) durch Körper gebildet sind, die jeweils mit einem speziellen Halterungsabschnitt (36a, 36b) gebildet sind, der in den Durchgangsschlitz des jeweiligen herausgepressten Materialabschnitts (16a, 16b) einführbar ist, und das die Halterungsabschnitte (36a, 36b) von einem zusammenwirkenden Paar durch ihre freien Außenenden aufeinander zu weisen, so dass sie in Position gehalten und in die Durchgangsschlitze von einem Paar der herausgepressten Materialabschnitte (16a, 16b) in diese eingreifend bei Festspannen der Schraubbolzenverbindung (18, 20, 22) gepresst werden.

## Revendications

1. Raccord de tube pour relier solidement des parties d'extrémité de tube, une partie d'extrémité étant insérée télescopiquement dans l'autre, de deux tubes (10, 12) ou coudes tubulaires, comprenant une partie d'extrémité de tube extérieur pourvue d'au moins une fente axiale (14) de bord d'extrémité, un dispositif de serrage prévu sur la dite partie d'extrémité extérieure pour bloquer, lorsqu'il est serré, la partie d'extrémité de tube intérieur solidement dans la dite partie d'extrémité de tube extérieur, le dit dispositif de serrage comprenant des éléments de maintien en forme d'oreille (16a, 16b ; 16a', 16b' ; 16A, 16B) formés avec la matière de la partie d'extrémité de tube extérieur, solidairement de cette partie, et qui font saillie radialement vers l'extérieur tranversalement aux tubes et sont également agencés en au moins une paire coopérante, un élément de maintien en forme d'oreille étant prévu de chaque côté de la dite fente axiale (14), la ou les dites paires d'éléments de maintien en forme d'oreille constituant des moyens de maintien de connexions boulonnées (18, 20, 22), la ou les dites paires d'éléments de maintien en forme d'oreille (16a, 16b ; 16a', 16b' ; 16A, 16B) présentant des trous ou des fentes traversants alignés, le serrage des dites connexions boulonnées (18, 20, 22) activant le dispositif de serrage pour bloquer la dite partie d'extrémité de tube extérieur fortement autour de la partie d'extrémité de tube intérieur insérée dans la précédente afin d'établir le raccordement opérationnel des tubes, dans lequel les dits éléments de maintien en forme d'oreille (16a, 16b ; 16a', 16b' ; 16A, 16B) ont chacun la forme d'une partie de matière de tube emboutie vers l'extérieur et solidaire de la dite partie d'extrémité de tube extérieur, chaque dit élément de maintien en forme d'oreille étant placé à une distance axiale du bord d'extrémité libre de la dite partie d'extrémité de tube extérieur, chaque élément de maintien en forme d'oreille présentant radialement ou latéralement, respectivement, une section transversale convergente, sensiblement trapézoïdale ou en forme de U dont la partie plus étroite se trouve à la plus grande distance radiale de l'axe longitudinal commun (A) des deux tubes (10, 12).

2. Raccord de tube selon la revendication 1, **caractérisé en ce que** les dites fentes traversantes alignées des dites parties de matière embouties vers l'extérieur sont prévues pour la réception au moins partielle de pièces de renforcement insérables (24a, 24b ; 28a, 28b) comportant des passages (26a, 26b ; 30a, 30b) alignés en paires et configurés pour le passage et la réception d'une tige de vis (18) de la connexion boulonnée (18, 20, 22), qui comprend également au moins un écrou de serrage (22) à une partie d'extrémité de la tige de vis et, à l'autre extrémité, un écrou ou une tête de vis fixe (20).

3. Raccord de tube selon la revendication 2, **caractérisé en ce que** les dites pièces de renforcement (28a, 28b) ont des surfaces de portée (32a, 32b) tournées dans des directions opposées et constituant des surfaces de butée et d'appui pour la tête de vis (20) et l'écrou (22) dans l'état serré de la connexion boulonnée (18, 20, 22).

4. Raccord de tube selon la revendication 2, **caractérisé en ce que** les dites pièces de renforcement (28a, 28b) sont constituées par des blocs, dont chacun comporte une partie d'attache particulière (36a, 36b) insérable dans la fente traversante de la partie de matière emboutie vers l'extérieur respective (16A, 16B), et **en ce que** les parties d'attache (36a, 36b) d'une paire coopérante sont en face l'une de l'autre par leurs extrémités extérieures libres, de sorte qu'elles sont tenues en position et elles sont pressées en prise dans les fentes traversantes d'une paire de parties de matière embouties vers l'extérieur (16A, 16B) lors du serrage de la connexion boulonnée (18, 20, 22).
